# NEUE EUROPÄISCHE PATENTSCHRIFT

(11) **EP 1 897 714 B2**
(45) Veröffentlichungstag und Bekanntmachung des Hinweises auf die Entscheidung über den Einspruch: **06.05.2015**
(45) Hinweis auf die Patenterteilung: 15.12.2010
(21) Anmeldenummer: 07016317.5
(22) Anmeldetag: 21.08.2007
(51) Int. Cl.: B60J 1/20

(54) **Antriebsvorrichtung für Fensterrollo**
Drive device for a window roller blind
Dispositif d'actionnement pour store de fenêtre

(30) Priorität: 25.08.2006 DE 102006039818; 05.07.2007 DE 102007031435
(43) Veröffentlichungstag der Anmeldung: 12.03.2008
(73) Patentinhaber: Küster Holding GmbH, 35630 Ehringshausen (DE)
(72) Erfinder: Schöler, Karsten, Dr., 57250 Netphen (DE); Seifert, Jan, 35216 Biedenkopf (DE); Marscholl, Klaus, 35630 Ehringshausen (DE); Medebach, Thomas, 35582 Wetzlar-Dudenhofen (DE); Kilp, Carsten, 35753 Greifenstein (DE)
(74) Vertreter: Müller, Eckhard

(56) Entgegenhaltungen:
- EP-A- 0 601 454
- EP-A- 1 188 591
- EP-A1- 1 334 874
- EP-A2- 1 182 067
- EP-A2- 1 334 875
- WO-A1-2005/082656
- DE-A1- 3 420 219
- DE-A1- 10 040 624
- DE-A1-102004 049 059
- DE-U1- 29 919 771
- DE-U1-202007 002 959
- JP-U- S63 185 718

## Beschreibung

Die Erfindung betrifft ein Fensterrollo (10), insbesondere ein Sonnenschutzrollo für Kraftfahrzeuge, wobei das Fensterrollo (10) eine Wickelkassette (12) mit einer Wickelwelle (14) und eine mit einem hinteren Rand (16) hieran befestigte Rollobahn (18) aufweist mit zumindest einer biegesteif ausgeführten Schubstange (102), die mit einem vorderen Rand (24) der Rollobahn (18) verbunden ist, wobei die Schubstange (102) entlang der Verfahrstrecke (26) des Fensterrollos (10) auf und ab verstellbar ist und mit einem elektrischen Antrieb (108) zum Verfahren der Rollobahn (18) entlang der Verfahrstrecke (26), wobei an der Schubstange Formschlussmittel (116) vorgesehen sind, die zur Kraft- oder Drehmomentübertragung vom Antrieb (108) auf die Schubstange (102) mit antriebsseitigen Kraft- oder Drehmomentübertragungsmitteln (110, 114) in Eingriff bringbar sind, wobei zur Kraft- oder Drehmomentübertragung auf die Schubstange eine Kopplungseinrichtung (106) vorgesehen ist.

### Stand der Technik

Das Dokument DE 202007002959U1 offenbart eine Antriebsvorrichtung mit den Merkmalen des Oberbegriff des unabhängigen Anspruchs.
Die EP0601454 A1 offenbart ebenfalls eine Antriebsvorrichtung.

Ein enster- bzw. Sonnenschutzrollo für Kraftfahrzeuge ist bereits aus der DE 34 15 930 A1 bekannt. Das beschriebene Fensterrollo für Kraftfahrzeuge enthält eine mittels Lagereinrichtungen drehbar gelagerte Tuchwelle, welche in einem Sockel bzw. einer Wickelkassette aufgenommen ist. An dieser Tuch- oder Wickelwelle ist eine aufwickelbare Folienbahn befestigt. Zum Aufwickeln der Folien- oder Tuchbahn ist eine an der Lagereinrichtung sich abstützende und an der Tuchwelle angreifende Federeinrichtung vorgesehen. Mit dem Vorderrand der Tuchbahn ist eine Schubeinrichtung verbunden, die eine in einem längs geschlitzten Führungsrohr befindliche flexible Schubstange aufweist, die durch eine Antriebseinrichtung aus einer Speichereinrichtung in das Führungsrohr verschiebbar ist. Die Schubstange wird von einer aus Kunststoff bestehenden Zahnstange gebildet und die Antriebseinrichtung enthält ein mit der Zahnstange formschlüssig in Eingriff stehendes Antriebszahnrad, das in einem Lagergehäuse drehbar gelagert ist, durch das die Zahnstange hindurch verläuft.

Die DE 34 15 930 A1 offenbart diverse Ausführungsbeispiele des Kraftfahrzeug-Fensterrollos, wobei entweder eine oder zwei Schubstangen zum Verfahren des Fensterrollos zum Einsatz gelangen können. Als nachteilig an diesem bekannten Sonnenschutzrollo für Kraftfahrzeuge erweist sich nicht nur der recht komplizierte und damit aufwändige konstruktive Aufbau. Vielmehr sind die Schubstangen im Bereich der Verfahrstrecke des Fensterrollos in längs geschlitzten Führungsrohren aufgenommen, die dauerhaft im Bereich der Verfahrstrecke des Fensterrollos angeordnet sind und somit die Sicht dauerhaft behindern. Sofern auch die Seitenfenster des Kraftfahrzeuges mit Sonnenschutzrollos ausgestattet werden sollen, erweisen sich derartige Führungen, welche nach der Lehre der DE 34 15 930 A1 im Bereich der Verfahrstrecke des Rollos und damit vor den Fenstern angeordnet sind, als besonders nachteilig.

Weiterhin ist aus der EP 1 123 824 A2 ein Seitenfensterrollo für Kraftfahrzeuge bekannt, wobei das Seitenfensterrollo mit einer Antriebseinrichtung ausgestattet ist, welche einen Getriebemotor aufweist, der über ein Betätigungsglied mit einem fest an der Rollobahn angebundenen Schlitten gekoppelt ist. Das Betätigungsglied wird hierbei von einem drucksteifen, linienförmigen Element gebildet. Es trägt an seinem motorseitigen Ende auf seiner Außenumfangsfläche eine eine Schraube oder Schnecke bildende Drahtwicklung, die unverschiebbar mit dem Betätigungsglied verbunden ist.

Dem zugehörigen Antriebsmotor ist ein Untersetzungsgetriebe nachgeordnet, auf dessen Ausgangswelle drehfest ein Stirnzahnrad sitzt, welches mit der Schnecke oder Schraube des Betätigungsglieds in Eingriff steht. Das Betätigungsglied ist im Bereich des Getriebes tangential zum Stirnzahnrad zwangsgeführt, wodurch ein Formschluss zwischen den am Betätigungsglied vorgesehenen Schraubenwindungen und den Zähnen des Stirnzahnrades gebildet wird, sodass durch Drehen des Zahnrades, das Betätigungsglied zum Öffnen oder Schließen des Seitenfensterrollos linear verschoben werden kann.

Bei einer solchen Antriebseinrichtung ist es nachteilig, dass das Betätigungsglied unmittelbar mit dem am Motor vorgesehenen Untersetzungsgetriebe in Eingriff steht. Dies erfordert eine unmittelbare Anordnung des Motors am Betätigungsglied bzw. an der für das Betätigungsglied vorgesehenen Zwangsführung. Zudem erfordert eine solche Ausführung aufgrund des längserstreckten Betätigungsglied ein erhebliches Maß an Bauraum, insbesondere wenn sich das Fensterrollo in der eingefahrenen Position befindet.

Die Flexibilität der Motoranordnung und Motorausgestaltung ist aufgrund der baulichen Vorgaben im Kraftfahrzeug und insbesondere in der vergleichsweise dünnwandig bauenden Kraftfahrzeugtür eingeschränkt. Auf vorgegebene Bauraummaße, die im Türbereich eingehalten werden müssen, ist eine derartige Antriebsvorrichtung aufgrund der starren Anordnung des Motors an einer Führungsstange für das Fensterrollo nur bedingt geeignet.

Weiterhin offenbart die DE 10 2004 049 059 A1 ein Kraftfahrzeugfensterrollo mit einem an einer Auszugsstange befestigtem federnden Stab, welcher zwischen zwei antriebsseitigen Reibrollen angeordnet ist. Bei einer solch reibschlüssigen Krafteinleitung zwischen einem Antrieb und einem Stab besteht insbesondere bei fortschreitendem Gebrauch infolge Materialverschleiß die Gefahr eines unerwünschten Schlupfs zwischen den Reibrollen und dem flach ausgebildeten Stab. Zudem muss bei einem solchen Antriebskonzept das zur Verfügung stehende Drehmoment gleichsam auf beide exakt zueinander zu positionierende Reibrollen übertragen werden.

Dies bedingt eine aufwendige, eine Vielzahl mechanischer miteinander in Eingriff stehender Kraft- und Drehmomentübertragungsmittel umfassende kostenintensive Montage und führt zu einer, für die Kraftfahrzeugindustrie nur bedingt tauglichen, recht störanfälligen Vorrichtung.

### Aufgabe

Demgegenüber liegt der Erfindung die Aufgabe zugrunde, eine Antriebsvorrichtung für Fensterrollos, insbesondere für Kraftfahrzeugfenster, mit den Merkmalen des Oberbegriffs des Anspruchs 1 zur Verfügung zu stellen, die besonders universell, einfach und intuitiv an vorgegebene Bauraummaße eines Kraftfahrzeugs anpassbar ist. Des Weiteren hat die Erfindung zum Ziel, eine besonders reibungsarme und leichtgängige Antriebsvorrichtung zu schaffen, die zudem einfach am Kraftfahrzeug zu befestigen ist und dabei besonders zuverlässig und langlebig ist.

### Erfindung und vorteilhaft Wirkungen

Die der Erfindung zugrunde liegende Aufgabe wird mittels einer Antriebsvorrichtung mit den Merkmalen gemäß Patentanspruch 1 gelöst. Weitere vorteilhafte Ausgestaltungen der Erfindung sind in den Unteransprüchen angegeben.

Demgemäß ist zur Kopplung des elektrischen Antriebs mit der mit der Rollobahn in mechanischer Wirkverbindung stehenden Schubstange oder Schubstangen eine formschlüssige Verbindung vorgesehen, welche eine direkte und unmittelbare Kopplung zwischen Schubstange und antriebsseitigem Drehmoment- oder Kraftübertragungsmittel zur Verfügung stellt.

Demgemäß sind unmittelbar an der zumindest einen vorzugsweise biegesteif ausgebildeten Schubstange Formschlussmittel vorgesehen, über welche die zur Verfügung stehende Kraft und/oder das zur Verfügung stehende Drehmoment effektiv, reibungsarm und vor allem schlupffrei eingebracht werden kann.

Im Gegensatz zu der in der DE 10 2004 049 059 A1 gezeigten reibschlüssigen Kraft- oder Drehmomentübertragung ist die erfindungsgemäße Kopplung zur Schubstange besonders reibungsarm, schlupffrei und gegenüber etwaigem, im Dauerbetrieb unweigerlich auftretenden Verschleiß wenig störanfällig.

Die erfindungsgemäße Schubstange ist insbesondere als biegesteige Schubstange ausgebildet, sodass eine Führung der Schubstange im Bereich der Verfahrstrecke des Fensterrollos entbehrlich ist.

Dabei kann entweder auf eine Führung für die Schubstangen gänzlich verzichtet werden oder es kann eine solche Führung - sofern überhaupt erforderlich - außerhalb der Verfahrstrecke des Fensterrollos, insbesondere in einem Bereich unterhalb der Wickelwelle bzw. Wickelkassette angeordnet sein, sodass diese Mittel zur Führung der Schubstangen, welche flexibel oder starr ausgebildet sein können, nicht sichtbar sind, auch unabhängig davon, ob das Sonnenschutzrollo nun eingefahren oder voll ausgefahren ist.

Zur Kraft- oder Drehmomentübertragung auf die zumindest eine Schubstange ist eine zumindest ein Zahnrad aufweisende Kopplungseinrichtung vorgesehen. Diese ist zur Bildung einer formschlüssigen Kopplung zwischen einem antriebsseitigen Drehmoment- bzw. Kraftübertragungsmittel und der anzutreibenden bzw. zu bewegenden Schubstange ausgebildet ist.

Durch die formschlüssige Kopplung zwischen dem Drehmomentübertragungsmittel und der Schubstange kann eine besonders reibungsarme Kraftübertragung und damit ein reibungsarmer, energiesparender Antrieb zur Verfügung gestellt werden.

Nach der Erfindung ist vorgesehen, dass die Kopplungseinrichtung und der Antrieb voneinander räumlich getrennt angeordnet sind und mittels eines flexiblen Kraft- oder Drehmomentübertragungsmittels aneinander gekoppelt sind. Das flexible Kraft- oder Drehmomentübertragungsmittel ermöglicht eine variable und flexible, an die jeweiligen Bauraumbedingungen anpassbare Anordnung des Antriebs. Dies ist gerade im Türbereich eines Kraftfahrzeugs von besonderer Bedeutung, in deren Innenraum bereits eine Vielzahl mechanischer Komponenten, etwa diejenigen einer Fensterheberanordnung untergebracht sind.

Das flexible Kraft- oder Drehmomentübertragungsmittel ermöglicht zudem auch eine räumlich getrennte Anordnung des Antriebs von der mit dem vorderen Rand der Rollobahn in Eingriff stehenden Schubstange.

Da Position und Ausrichtung der vorzugsweise linear beweglichen Schubstange durch die konkrete Anordnung und Ausgestaltung des Sonnenschutzrollos und seiner Rollobahn vorgegeben ist, ermöglicht die Erfindung nun ein davon unabhängiges und nahezu freies Anordnen des elektrischen Antriebs. Durch die flexible Kopplung zwischen Antrieb und Schubstange kann die erfindungsgemäße Antriebsvorrichtung universell bei einer Vielzahl unterschiedlicher Kraftfahrzeuge Verwendung finden und muss nicht jeweils speziell auf die Bauraumanforderungen eines bestimmten Kraftfahrzeugtyps angepasst werden.

Die flexible Kraft- oder Drehmoment übertragende Kopplung erlaubt vielmehr eine beliebige Ausrichtung und Anordnung des elektromotorischen Antriebs, beispielsweise in solchen Bereichen innerhalb einer Kraftfahrzeugtür, die etwas dickwandiger bauen, sodass dort der Antrieb problemlos angeordnet werden kann.

Nach einer Weiterbildung der Erfindung ist vorgesehen, das Kraft- oder Drehmomentübertragungsmittel als flexiblen Betätigungszug oder als flexible Welle auszubilden. Es ist ein Drehmomentübertragungsmittel vorgesehen, welches zur Übertragung des vom Elektromotor zur Verfügung gestellten Drehmoments als flexible Welle ausgebildet ist und abtriebsseitig mit der Schubstange form- oder kraftschlüssig gekoppelt ist.

Nach einer Weiterbildung ist insbesondere vorgesehen, die Schubstange als biegungssteifes Steigungskabel mit einer schrauben- oder spiralartigen Drahtumwicklung auszubilden. Die vorzugsweise aus Federstahldraht zu bildende Drahtumwicklung umschließt die Seele des Steigungskabels und ist mit dieser fest verbunden. Es ist hierbei insbesondere vorgesehen, dass die Drahtumwicklung oder die Drahtwendel das Steigungskabel in Axialrichtung bzw. entlang seiner Längserstreckung nahezu vollständig umgeben.

Nach der Erfindung ist vorgesehen, dass die Kopplungseinheit abtriebsseitig, das heißt, zur Schubstange hin, ein mit der Schubstange formschlüssig in Eingriff stehendes Zahnrad aufweist. Die Schubstange wird in der Kopplungseinrichtung tangential an diesem Zahnrad entlang zwangsgeführt, sodass die über den Motor zur Verfügung gestellte Drehbewegung des Zahnrades in eine Translationsbewegung der Schubstange überführt werden kann.

Von Vorteil weist das Zahnrad ein an die Geometrie der Drahtumwicklung des Steigungskabels angepasste Passverzahnung auf. Da die das Steigungskabel schraubenartig umgebenden Drahtwendel typischerweise eine kreisförmige Querschnittsgeometrie aufweisen, ist als Passverzahnung am Zahnrad eine Kreisbogenverzahnung, Wildhaber-Novikov (N-W)-Verzahnung oder als Evolventenverzahnung vorgesehen. Es kommen dabei insbesondere solche Zahnräder mit konkav gewölbten Rad- oder Zahnflanken in Betracht, sodass die im Wesentlichen ein rundes Querschnittsprofil aufweisenden Drahtwendel der Schubstange mit möglichst geringen Reibungsverlusten mit den Zähnen des Zahnrades kämmen.

Die Zahnflanken des Zahnrades weisen somit einen parabelartigen Verlauf auf. Zudem sind die radial nach außen weisenden Zähne des Zahnrades abgeflacht. Insbesondere durch diese abgeflachte Kreisbogenverzahnung des Zahnrades kann erreicht werden, dass das am Zahnrad tangential entlanggeführte Steigungskabel bei Drehung des Zahnrades hauptsächlich mit einer in Tangentialrichtung wirkenden Kraft beaufschlagt wird.

Zusätzlich ist die Tiefe der Verzahnung relativ gering zu wählen, damit der Anteil der in Radialrichtung vom Zahnrad auf das Steigungskabel übertragenen Kraft möglichst gering ist, da derartige, quer zur Längserstreckung des Kabels angreifende Kräfte sich aufgrund der zumindest bereichsweisen Zwangsführung des Kabels reibungserhöhend auswirken. Durch die erfindungsgemäße Ausgestaltung der Passverzahnung in Form einer Kreisbogenverzahnung und einer entsprechend geringen Zahntiefe kann das vom Elektromotor zur Verfügung gestellte Drehmoment optimal in eine Translationsbewegung der Schubstange tangential zur Drehrichtung des Zahnrades umgewandelt werden.

Weiterhin ist vorgesehen, dass die radiale Höhe der Verzahnung bzw. die Höhe der Zahnflanken des Zahnrades der Kopplungseinrichtung weniger als 1 mm beträgt. Zudem kann der Radius des Zahnrades sowie die Größe und die Beabstandung der einzelnen Zähne in Umfangsrichtung des Zahnrades derart aufeinander abgestimmt werden, dass das am Zahnrad anliegende Motordrehmoment in eine möglichst große tangential auf die Schubstange einwirkende Verschiebekraft umgewandelt wird.

Es ist insbesondere vorstehen, dass der Radius des Zahnrades und dessen Verzahnung sowie die Schraubenhöhe der Drahtumwicklung am biegungssteifen Steigungskabel derart aufeinander abgestimmt sind, dass stets mehrere Zähne des Zahnrades mit einer entsprechenden Anzahl von Drahtumwicklungen in Eingriff stehen.

Nach einem weiteren vorteilhaften Aspekt der Erfindung ist vorgesehen, dass außerhalb der Verfahrstrecke des Fensterrollos eine Führung für die Schubstange vorgesehen ist. Die Führung ist vorzugsweise rohr- oder schlauchförmig ausgebildet und stellt eine lineare Zwangsführung für die Schubstange zur Verfügung. Keinesfalls ist die Erfindung jedoch auf solche rohr- oder schlauchförmigen Führungen beschränkt. Es ist prinzipiell ausreichend, die Führung im Bereich der Kopplungseinheit vorzusehen.

Dadurch, dass die Schubstange als biegesteifes Element, insbesondere als biegesteifes Steigungskabel ausgebildet ist, kann auf eine Führung im Sichtbereich des Fensters in vorteilhafter Weise verzichtet werden. Somit kommen im Sichtbereich des Fensters keinerlei störende Führungsmittel zu liegen, wenn die Rollobahn beispielsweise in der Wickelkassette aufgerollt ist.

Nach einem weiteren vorteilhaften Aspekt ist vorgesehen, dass die Kopplungseinheit zumindest eine Aufnahme für die Schubstangenführung aufweist. Diese Aufnahme ist vorzugsweise derart ausgebildet, dass die schlauch- oder rohrartig vorgesehene Führung in diese Aufnahme mittels geeigneter Rastelemente einklipsbar ist. Auf diese Art und Weise kann eine besonders einfache Anbindung der Kopplungseinheit an die Führung und umgekehrt verwirklicht werden. Beim Zusammenbau der erfindungsgemäßen Antriebsvorrichtung sind daher prinzipiell gar keine oder nur einige wenige Werkzeuge erforderlich.

Es kann insbesondere vorstehen werden, dass sich die Führung beidseitig in Tangentialrichtung zum Zahnrad von der Kopplungseinheit erstreckt. Die Kopplungseinheit ist dann vorzugsweise mit zwei Aufnahmen für die Schubstangenführung ausgebildet. Somit kann die Krafteinleitung auf die Schubstange prinzipiell an jeder Stelle des Führungsrohrs oder Führungsschlauchs vorgesehen werden.

Weiterhin ist vorgesehen, die Führung und/oder die Schubstange durch einen Fensterschacht einer Kraftfahrzeugtür zu führen, wobei im Übergangsbereich zum Fensterschaft ein flexibles Dichtelement vorgesehen ist. Mittels eines solchen Dichtelementes aus Kunststoff, Kautschuk oder dergleichen flexiblen Materialien wird es ermöglicht, die Führung und die darin zu führende Schubstange beispielsweise auch durch den Nassraum einer Fahrzeugtür zu führen.

Die Dichtung ermöglicht hierbei eine flüssigkeits- und vorzugsweise auch staubdichte Trennung bzw. Abschottung empfindlicher mechanischer oder elektrischer Komponenten der Antriebsvorrichtung gegenüber dem Nassraum der Kraftfahrzeugtür.

Im Extremfall kann sogar vorgesehen werden, eine derartige Dichtung am flexiblen Kraft- oder Drehmomentübertragungsmittel vorzusehen, sodass sogar die Kopplungseinrichtung erforderlichenfalls auch im Nassraum der Kraftfahrzeugtür untergebracht werden kann. Mittels des flexiblen Kraft- oder Drehmomentübertragungsmittel kann dabei der das Rollo antreibende Elektromotor in einem geschützten Bereich untergebracht werden.

Weiterhin ist vorgesehen, den mit der Kopplungseinheit in Eingriff stehenden Endabschnitt der Drehmomentübertragungswelle als Mehrkant- insbesondere als Vierkantprofil auszubilden. Auf ein solches Vierkantprofil kann das mit einer entsprechenden Ausnehmung versehene Zahnrad auf die Welle aufgeschoben und drehfest mit dieser verbunden werden.

Weiterhin ist vorgesehen, im Anbindungsbereich der Kopplungseinrichtung ein Adapterstück vorzusehen, welches wellenseitig, das heißt zum Motor hin, an die Geometrie der Welle angepasste Formschlussmittel aufweist und kopplungsseitig, das heißt zur Kopplungseinrichtung hin gewandt, eine an die Kopplungseinrichtung angepasste Vielfachverzahnung oder dergleichen Formschlussmittel aufweist.

Mit Hilfe eines solchen Adapterstücks wird es ermöglicht, kommerziell erhältliche Einzelkomponenten, wie etwa Drehwellen, Zahnräder oder gar eine Kopplungseinrichtung mit teils unterschiedlich standardisierten Anschlüssen und dementsprechend unterschiedlich ausgebildeten Formschlussmitteln aneinander anzupassen. Durch Verwendung solcher Adapterstücke können zum Beispiel auch solche Wellen verwendet werden, die an ihrem kopplungselementseitigen Endabschnitt gerade keine einer vorgesehenen Kopplungseinrichtung entsprechende Profilierung oder dementsprechende Formschlussmittel aufweisen.

Nach einem weiteren Aspekt ist vorgesehen, am Motor und/oder an der Kopplungseinheit einen Toleranzausgleich für einen axialen Längen- oder axialen Toleranzausgleich der Welle vorzusehen. Mittels eines solchen Längen- oder Toleranzausgleichs kann die Flexibilität der erfindungsgemäßen Antriebsvorrichtung hinsichtlich unterschiedlicher Einbaubedingungen deutlich erhöht werden.

### Ausführungsbeispiele

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand vorliegender Erfindung, auch unabhängig von ihrer Zusammenfassung in den Ansprüchen oder deren Rückbeziehung. Es zeigen:
- Figur 1: ein Ausführungsbeispiel der erfindungsgemäßen Antriebsvorrichtung für ein Fahrzeugfensterrollo, gesehen von der Fahrzeugaußenseite,

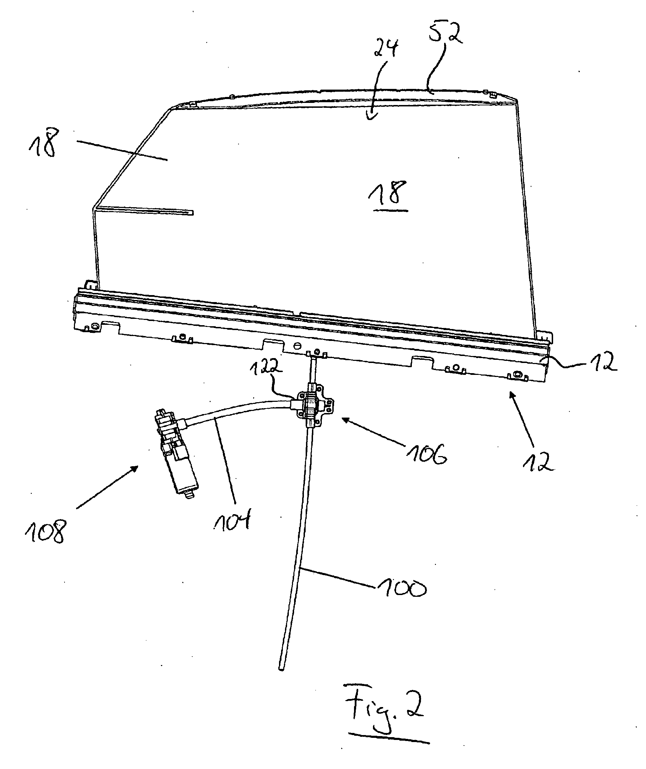

- Figur 2: die Antriebsvorrichtung gemäß Figur 1 von der Innenseite des Fahrzeugs aus gesehen,

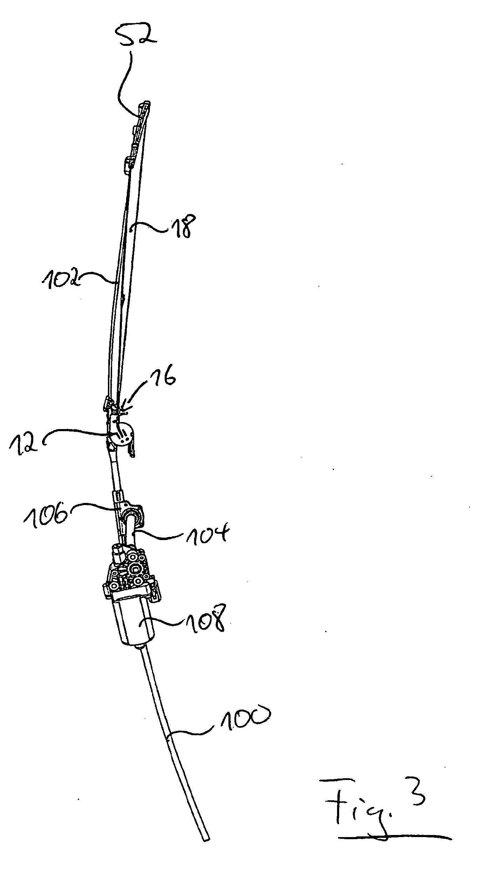

- Figur 3: eine seitliche Ansicht der Antriebsvorrichtung gemäß Figuren 1 und 2,
- Figur 4: eine Querschnittsdarstellung der Antriebsvorrichtung,
- Figur 5: eine vergrößerte Querschnittsdarstellung der Vorrichtung gemäß Figur 4 im Bereich der Kopplungseinrichtung und
- Figur 6: eine Querschnittsdarstellung der Kopplungseinrichtung, geschnitten in Axialrichtung des Zahnrades.

In den Figuren ist ein Fensterrollo 10, insbesondere ein Sonnenschutzrollo für Kraftfahrzeuge dargestellt, wobei das Rollo aus einer eingefahrenen Position in eine ausgefahrene Position verfahrbar ist, um beispielsweise eine Fensterscheibe des Kraftfahrzeugs abzuschatten. Das Sonnenschutzrollo 10 weist eine Wickelkassette 12 auf, welche eine Wickelwelle 14 und eine mit einem hinteren Rand 16 hieran befestigte Rollobahn 18 aufweist, welche bevorzugt aus Tuch, Folie oder dergleichen besteht. Weiterhin ist zumindest eine Schubstange 102 vorgehen, die mit vorderen Rand 24 der Rollobahn 18 verbunden ist.

Diese Schubstange 102 ist sinnvollerweise etwa im mittleren Abschnitt der Rollobahn 18 angeordnet.

Bevorzugt sind die Wickelwelle 14 bzw. Wickelkassette 12 in einer Fahrzeugtür eines Kraftfahrzeuges angeordnet. Auch geht aus den zeichnerischen Darstellungen der Ausführungsbeispiele hervor, dass die Schubstange 102 und die Rollobahn 18 im Bereich des vorderen Randes 24 mittels eines sich quer zur Rollobahn 18 erstreckenden Halters 52 verbunden sind. Der Halter 52 kann als Blende, Rahmen oder Profilrohr ausgebildet sein.

Die Schubstange 102 ist entlang der Verfahrstrecke 26 des Fensterrollos 10 auf und ab verstellbar, wobei ein elektrischer Antrieb 108 zum Verfahren des Fensterrollos 10 entlang der Verfahrstrecke 26 vorgesehen ist.

Hierbei ist vorgesehen, dass die Schubstange 102 jedenfalls im Bereich der Verfahrstrecke 26 des Fensterrollos 10 gerade keine äußere Führung aufweist. Demgemäß ist im Bereich der Verfahrstrecke 26 des Rollos 10 die Schubstange 102 ungeführt. Eine Führung 100, etwa in Form eines Führungsrohres oder Führungsschlauchs ist hingegen im Bereich außerhalb der Verfahrstrecke 26 vorgesehen. Die Führung 100 grenzt vorzugsweise am unteren Rand der Rollokassette 12 an diese an.

Zum Verstellen der Rollobahn 18 ist der Elektromotor 108 über eine flexible Welle 104 und über eine Kopplungseinrichtung 106 mit der Schubstange 102 gekoppelt. Mittels der erfindungsgemäßen Kopplung über eine flexible Welle 104 wird in vorteilhafter Weise erreicht, dass der Motor 108 beliebig, etwa dem Bauraumanforderungsprofil der Kraftfahrzeugtür entsprechend, auch beabstandet von der zu verschiebenden Schubstange 102 angeordnet werden kann.

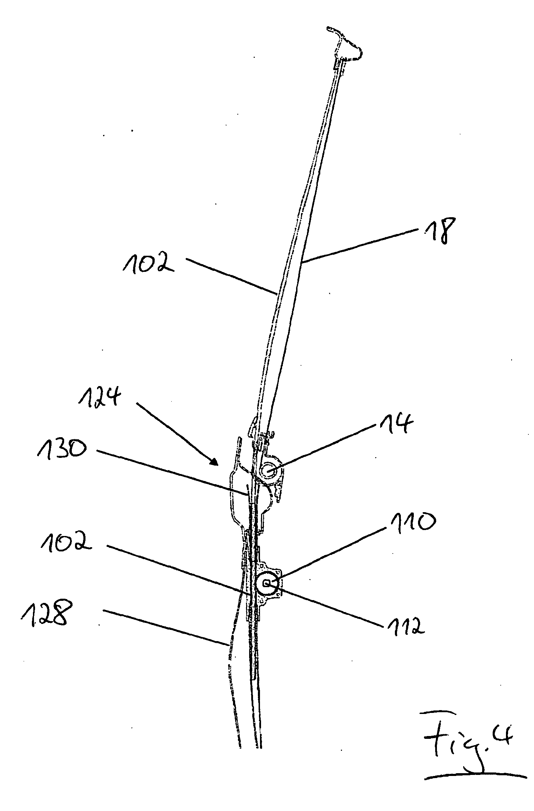

Wie anhand der Figuren 4 bis 6 verdeutlicht, steht die flexible Welle 104 mit einem innerhalb der Kopplungseinrichtung 106 drehbar gelagerten Zahnrad 110 in Wirkverbindung. Hierfür ist beispielsweise das in die Kopplungseinrichtung 106 hineinführende Ende der flexiblen Welle 104 als Vierkantprofil 112 ausgebildet, auf welches das Zahnrad 110 mit einer entsprechenden geformten zentrischen Ausnehmung aufgeschoben wird. Auf diese Art und Weise wird eine besonders kostengünstige Drehverbindung zwischen Welle 104 und dem Zahnrad 110 geschaffen.

Im unmittelbar an das Zahnrad 110 angrenzenden Bereich weist die Kopplungseinrichtung 106 eine Aufnahme 120 bzw. eine Führung für die Schubstange 102 auf. Diese Führung ist dergestalt, dass zwischen der Schubstange 102 und dem Zahnrad 110 ein Formschluss gebildet wird, der bewirkt, dass infolge einer Drehung des Zahnrades 110 die Schubstange 102 eine translatorische, bezogen auf die Geometrie des Zahnrades 110 tangentiale Verschiebebewegung erfährt.

Die Schubstange 102 ist insbesondere als biegesteifes Steigungskabel mit einer schraubenartigen Drahtumwicklung 116 ausgebildet. Diese Drahtwendel 116 sind vorzugsweise aus Federstahldraht gebildet und erstrecken sich nahezu über die gesamte Längserstreckung der Schubstange 102.

Die Geometrie der Federstahldrahtwende 116 und die am Zahnrad 110 vorgesehene Verzahnung 114 sind derart aneinander angepasst, dass die Kraftübertragung hinsichtlich einer Tangentialkomponente maximiert ist. Demgemäß ist die Verzahnung 114 als Kreisbogenverzahnung mit abgeflachten Zähnen ausgebildet. Die Höhe der Verzahnung beträgt dabei weniger als 1 mm, sie kann aber auch abhängig von der konkreten Ausgestaltung der Schubstangenverzahnung und der Ausgestaltung des Zahnrades 110 davon abweichen und auch durchaus im Millimeterbereich liegen.

Die ineinandergreifenden Formschlussmittel von Schubstange 102 und dem Zahnrad 110 sind jedenfalls so ausgestaltet, dass im Bereich der Kopplungseinrichtung 106 nur geringfügige Kräfte in Radialrichtung, das heißt quer oder senkrecht zur Längserstreckung der Schubstange 102 auf diese übertragen werden. Durch diese Optimierung kann die Reibung der Schubstange 102 innerhalb ihrer Führung 100 auf ein Minimum reduziert werden.

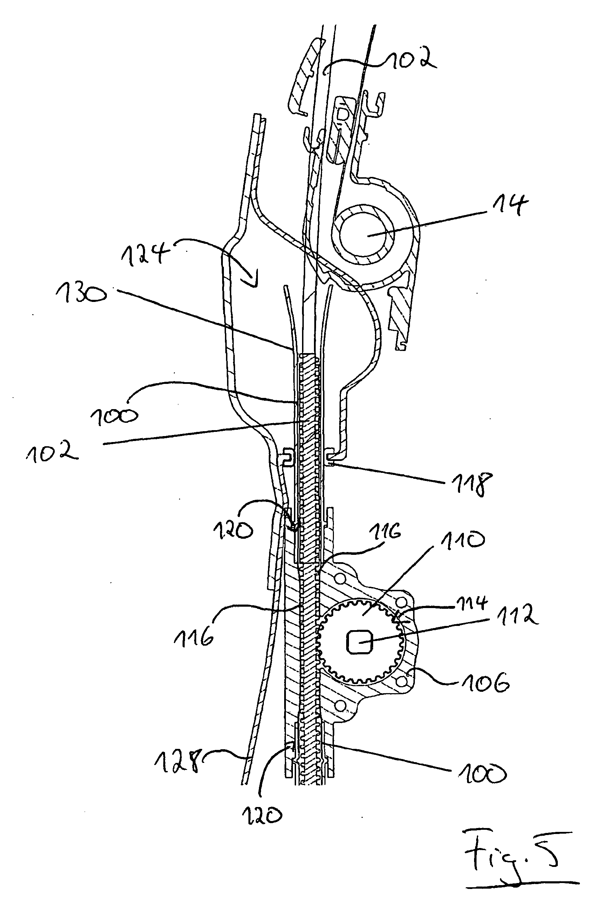

Es ist weiterhin vorgesehen, dass die Führung 100 in das Gehäuse der Kopplungseinrichtung 106 einclipsbar ist. Hierfür weist die Kopplungseinrichtung 106, wie in Figur 5 dargestellt, eine obere und eine untere Aufnahme 120 auf, in welche die entsprechend ausgebildeten Führungen 100 mit dafür vorgesehenen Rastelementen einclipsbar sind.

Nach oben, das heißt zur Rollokassette 12 hin, weist die Führung 100 einen auskragenden erweiterten Bereich 130 auf. Dieser ist insbesondere für die Abwärtsbewegung der Rollobahn vorgesehen, wenn die Schubstange 102 in die schlauchartige Führung 100 eintaucht oder einfährt.

Die clipsbare Verbindung zwischen der Führung 100 und der Kopplungseinrichtung 106 erlaubt eine universelle und vielseitige Anordnung der Kopplungseinrichtung 106 entlang der Schubstange 102. In dem gezeigten Ausführungsbeispiel ist die Kopplungseinrichtung 106 nahe der Rollokassette 12 angeordnet.

Wie in den Figuren 4 und 5 verdeutlicht, kann die Führung 100 mitsamt der darin zu führenden Schubstange 102 auch durch einen Schachtbereich oder den Fensterschacht 124 einer Kraftfahrzeugtür 128 geführt werden. Im Übergangsbereich zum Fensterschacht 124 ist hierfür insbesondere ein Dichtelement 118 aus flexiblem, abdichtendem Material, wie Kunststoff, Kautschuk, Gummi oder dergleichen vorgesehen.

Hierdurch kann eine hermetische Trennung eines Fensterschaftes 124 oder eines Nassraumes der Fahrzeugtür gegenüber dem Trockenraum verwirklicht werden, in welchem empfindliche mechanische und/oder elektrische Teile anzuordnen sind.

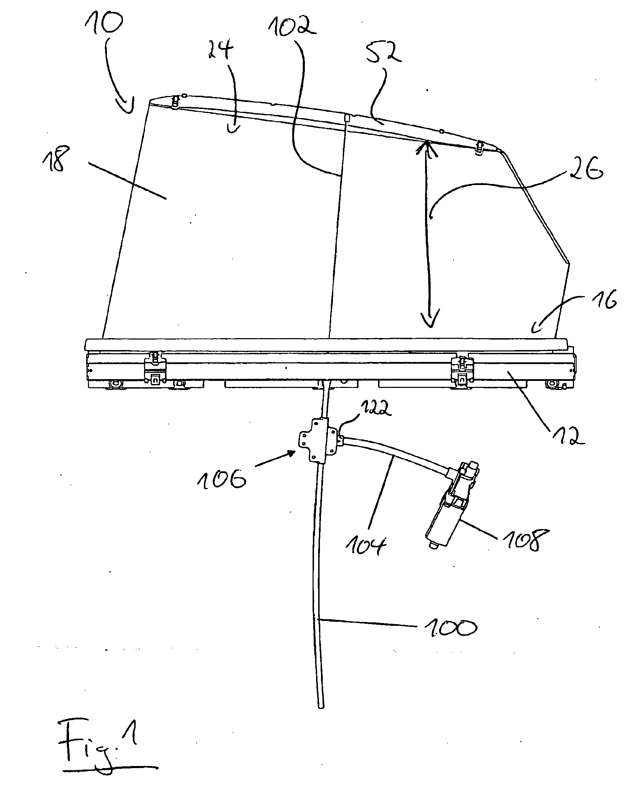

In Figur 1 ist im Übergangsbereich zwischen der flexiblen Welle 104 und der Kopplungseinrichtung 106 weiterhin ein Adapterstück 122 gezeigt. Dieses ermöglicht eine Anpassung von an der Welle 104 endseitig vorgesehenen Formschlussmitteln mit solchen Formschlussmitteln, die seitens der Kopplungseinrichtung 106 vorgesehen sind.

Ein derartiges Adapterstück 122 ermöglicht somit die Verwendung unterschiedlichster Wellen 104, welche beispielsweise gegenüber Wellen mit einem durchgängigen Vierkantprofil preisgünstiger sind. Auch können mittels des Adapterstückes 122 auch solche kommerziell erhältliche Einzelkomponenten mit unterschiedlich ausgestalteten Formschluss- oder Kraftübertragungsmitteln oder Kraftübertragungsanschlüssen aneinander angepasst werden.

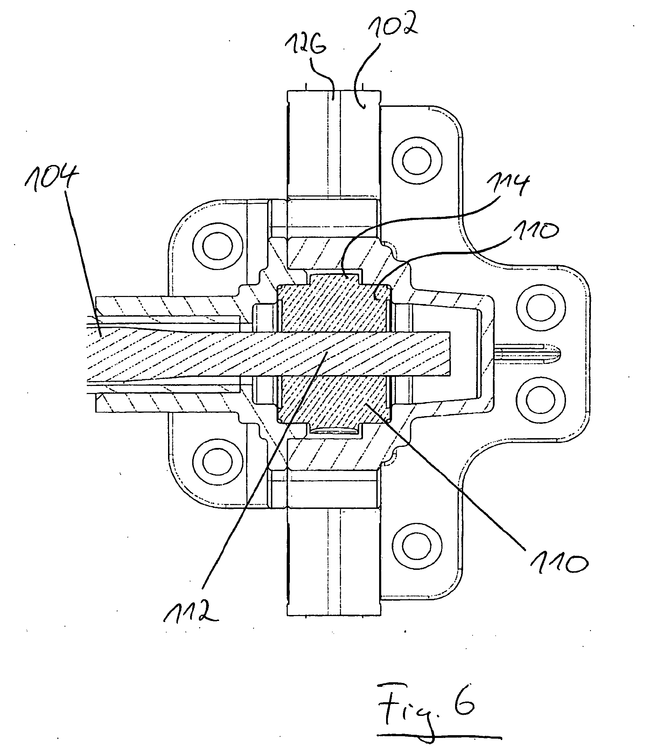

Figur 6 zeigt weiterhin einen Querschnitt durch die Kopplungseinrichtung 106. Zu sehen ist hier eine Welle 104 mit einem vierkantprofilartig ausgebildeten freien Endabschnitt 112. Dieser kommt in einer durchgängigen axialen Vierkantausnehmung des Zahnrades 110 zu liegen. Die Verzahnung 114 des Zahnrades 110 erstreckt sich hierbei nicht über die gesamte axiale Breite des Zahnrades 110. Ebenso wird allein durch die kreisförmige Querschnittsgeometrie der Schubstange 102 erreicht, dass lediglich ein in Umfangsrichtung der Schubstange 102 gesehener schmaler Angriffsbereich 126 mit der Verzahnung 114 in Anlagestellung und somit in Formschlussstellung gelangt.

Durch die vergleichsweise schmale Ausgestaltung der ineinandergreifenden Formschlussmittel 114 und 126, am Zahnrad 110 und an der Schubstange 102 kann eine besonders reibungsarme Kopplung und Kraftübertragung zwischen der Welle 104 und der Schubstange 102 erreicht werden, die eine dementsprechend niedrige Motorleistung des Antriebs verlangt.

### Bezugszeichenliste

- 10: Fensterrollo
- 12: Rollokassette
- 14: Wickelwelle
- 16: Hinterer Rand
- 18: Rollobahn
- 24: Vorderer Rand
- 52: Halter
- 100: Führung
- 102: Schubstange
- 104: Flexible Welle
- 106: Kopplungseinrichtung
- 108: Motor
- 110: Zahnrad
- 112: Vierkant
- 114: Verzahnung
- 116: Drahtwendel
- 118: Dichtelement
- 120: Aufnahme
- 122: Adapterstück
- 124: Fensterschaft
- 126: Angriffsbereich
- 128: Fahrzeugtür
- 130: Auskragung

## Patentansprüche

1. Antriebsvorrichtung gekoppelt mit einem Fensterrollo (10), insbesondere einem Sonnenschutzrollo für Kraftfahrzeuge, wobei das Fensterrollo (10) eine Wickelkassette (12) mit einer Wickelwelle (14) und eine mit einem hinteren Rand (16) hieran befestigte Rollobahn (18) aufweist mit zumindest einer biegesteif ausgeführten Schubstange (102), die mit einem vorderen Rand (24) der Rollobahn (18) verbunden ist, wobei die Schubstange (102) entlang der Verfahrstrecke (26) des Fensterrollos (10) auf und ab verstellbar ist und mit einem elektrischen Antrieb (108) zum Verfahren der Rollobahn (18) entlang der Verfahrstrecke (26), wobei an der Schubstange Formschlussmittel (116) vorgesehen sind, die zur Kraft- oder Drehmomentübertragung vom Antrieb (108) auf die Schubstange (102) mit antriebsseitigen Kraft- oder Drehmomentübertragungsmitteln (110, 114) in Eingriff bringbar sind, wobei zur Kraft- oder Drehmomentübertragung auf die Schubstange eine Kopplungseinrichtung (106) vorgesehen ist, wobei die Kopplungseinrichtung (106) und der Antrieb voneinander räumlich getrennt angeordnet sind und mittels eines flexiblen, anderen Drehmomentübertragungsmittels (104) gekoppelt sind, wobei die Kopplungseinrichtung ein Zahnrad als Kraft- oder Drehmomentübertragungsmittel (110, 114) aufweist, das formschlüssig mit der Schubstange in Eingriff ist, **dadurch gekennzeichnet, dass** ein Endabschnitt des anderen Drehmomentübertragungsmittels (104) als Mehrkant ausgebildet ist und damit mit dem Zahnrad in Eingriff steht.

2. Antriebsvorrichtung nach Anspruch 1, **dadurch gekennzeichnet, dass** das Drehmomentübertragungsmittel (104) als flexibler Betätigungszug oder als flexible Welle ausgebildet ist.

3. Antriebsvorrichtung nach einem der vorhergehenden Ansprüche, **dadurch gekennzeichnet, dass** die Schubstange (102) als biegesteifes Steigungskabel mit einer schrauben- oder spiralartigen Drahtumwicklung (116) ausgebildet ist.

4. Antriebsvorrichtung nach einem der vorhergehenden Ansprüche, **dadurch gekennzeichnet, dass** das Zahnrad (110) eine auf die Geometrie der Schubstange (102) abgestimmte Passverzahnung, insbesondere eine Kreisbogenverzahnung aufweist.

5. Antriebsvorrichtung nach Anspruch 4, **dadurch gekennzeichnet, dass** die radiale Höhe der Zahnflanken des Zahnrades (110) Millimeter- oder im Submillimeterbereich liegt.

6. Antriebsvorrichtung nach einem der vorhergehenden Ansprüche, **dadurch gekennzeichnet, dass** außerhalb der Verfahrstrecke (26) des Fensterrollos (10) eine Führung (100) für die Schubstange (102) vorgesehen ist.

7. Antriebsvorrichtung nach Anspruch 6, **dadurch gekennzeichnet, dass** die Kopplungseinrichtung (106) zumindest eine Aufnahme (120) für die Führung (100) aufweist, in welche die Führung (100) einclipsbar ist.

8. Antriebsvorrichtung nach einem der vorhergehenden Ansprüche 6 oder 7, **dadurch gekennzeichnet, dass** die Führung (100) und/oder die Schubstange (102) durch einen Fensterschacht (120) einer Kraftfahrzeugtür geführt ist bzw. sind, wobei im Übergangsbereich zum Fensterschacht (124) zumindest ein Dichtelement (118) vorgesehen ist.

9. Antriebsvorrichtung nach einem der Ansprüche 2-8, **dadurch gekennzeichnet, dass** bei Ausbildung des Drehmomentübertragungsmittels als flexible Welle im Anbindungsbereich der Kopplungseinrichtung (106) ein Adapterstück (122) vorgesehen ist, welches antriebsseitig an die Geometrie der Welle angepasste Formschlussmittel und abtriebsseitig an die Geometrie der Kopplungseinrichtung (106), insbesondere deren Zahnrad (110) angepasste Formschlussmittel aufweist.

10. Antriebsvorrichtung nach einem der vorhergehenden Ansprüche, **dadurch gekennzeichnet, dass** am elektrischen Antrieb (108) und/oder an der Kopplungseinrichtung (106) ein Toleranzausgleich für einen axialen Längenausgleich oder Toleranzausgleich der Welle (104) vorgesehen ist.

## Claims

1. Drive device coupled with a window roller blind (10), particularly a sun protection roller blind for motor vehicles, wherein the window roller blind (10) comprises a winding cassette (12) with a winding shaft (14) and a roller blind web (18), which is fastened thereto by a rear edge (16), with at least one pushrod (102) which is constructed to be stiff in bending and is connected with a front edge (24) of the roller blind web (18), wherein the pushrod (102) is adjustable up and down along the travel path (26) of the window roller blind (10), and with an electric drive (108) for moving the roller blind web (18) along the travel path (26), wherein provided at the pushrod are mechanically positive coupling means (116) which for the transmission of force or torque from the drive (108) to the pushrod (102) can be brought into engagement with force or torque transmission means (110, 114) at the drive side, wherein a coupling device (106) is provided for the force or torque transmission to the pushrod, wherein the coupling device (106) and the drive are arranged physically separately from one another and are coupled by means of another flexible torque transmission means (104), wherein the coupling device comprises a gearwheel, which is in mechanically positive engagement with the pushrod, as force or torque transmission means (110, 114), **characterised in that** an end section of the other torque transmission means (104) is constructed as a polygon and thereby in engagement with the gearwheel.

2. Drive device according to claim 1, **characterised in that** the torque transmission means (104) is constructed as a flexible actuating pull or as a flexible shaft.

3. Drive device according to any one of the proceeding claims, **characterised in that** the pushrod (102) is constructed as a pitch cable, which is stiff in bending, with a helical or spiral wire winding (116).

4. Drive device according to any one of the preceding claims, **characterised in that** the gearwheel (110) has a registration toothing matched to the geometry of the pushrod (102), particularly an arcuate toothing.

5. Drive device according to claim 4, **characterised in that** the radial height of the tooth flanks of the gearwheel (110) lies in the millimetre or submillimetre range.

6. Drive device according to any one of the preceding claims, **characterised in that** a guide (100) for the pushrod (102) is provided outside the travel path (26) of the window roller blind (100).

7. Drive device according to claim 6, **characterised in that** the coupling device (106) comprises at least one receptacle (120), into which the guide (100) can be clipped, for the guide (100).

8. Drive device according to one of the preceding claims 6 and 7, **characterised in that** the guide (100) and/or the pushrod (102) is or are led through a window shaft (120) of a motor vehicle door, wherein at least one sealing element (118) is provided in the transition region to the window shaft (124).

9. Drive device according to any one of claims 2 to 8, **characterised in that** in the case of construction of the torque transmission means as a flexible shaft an adapter member (122) is provided in the coupling region of the coupling device (106) and comprises mechanically positive coupling means matched at the drive side to the geometry of the shaft and mechanically positive coupling means matched at the drive output side to the geometry of the coupling device (102), particularly to the gearwheel (110) thereof.

10. Drive device according to any one of the preceding claims, **characterised in that** a tolerance compensation for axial length compensation or tolerance compensation of the shaft (104) is provided at the electric drive (108) and/or at the coupling device (106).

## Revendications

1. Dispositif d'actionnement couplé à un store de fenêtre (10), notamment à un store pare-soleil pour véhicules automobiles, le store de fenêtre (10) comportant un boîtier d'enroulement (12) avec un arbre d'enroulement (14) et une bande de store (18) y étant fixée avec un bord arrière (16) avec au moins une tige de poussée (102) rigide à la flexion reliée à un bord avant (24) de la bande de store (18), la tige de poussée (102) pouvant être déplacée en va-et-vient le long de la course de déplacement (26) du store de fenêtre (10) et avec un actionnement électrique (108) pour déplacer la bande de store (18) le long de la course de déplacement (26), un moyen de complémentarité de formes (116) étant prévu au niveau de la tige de poussée, ledit moyen pouvant être amené en prise avec les moyens de transmission de force ou de couple (110, 114) pour la transmission de la force ou du couple de l'actionnement (108) à la tige de poussée (102), un dispositif de couplage (106) étant prévu pour la transmission de la force ou du couple à la tige de poussée, le dispositif de couplage (106) et l'actionnement étant séparés l'un de l'autre dans l'espace et étant couplés à l'aide d'un autre moyen de transmission de couple (104) flexible, le dispositif de couplage comprenant une roue dentée en tant que moyen de transmission de force ou de couple (110, 114), laquelle est en prise avec la tige de poussée par engagement par complémentarité de formes, **caractérisé en ce qu'**un segment d'extrémité de l'autre moyen de transmission de couple (104) est réalisé sous forme de profilé à plusieurs pans et est par conséquent en prise avec la roue dentée.

2. Dispositif d'actionnement selon la revendication 1, **caractérisé en ce que** le moyen de transmission de couple (104) prend la forme d'un câble de traction flexible ou d'un arbre flexible.

3. Dispositif d'actionnement selon l'une quelconque des revendications précédentes, **caractérisé en ce que** la tige de poussée (102) prend la forme d'un câble montant rigide à la flexion avec un enroulement de fil (116) de type vis ou spirale.

4. Dispositif d'actionnement selon l'une quelconque des revendications précédentes, **caractérisé en ce que** la roue dentée (110) comporte un endentement ajusté adapté à la forme de la tige de poussée (102), notamment un endentement en arc de cercle.

5. Dispositif d'actionnement selon la revendication 4, **caractérisé en ce que** la hauteur radiale des côtés de dent de la roue dentée (110) est de l'ordre de grandeur du millimètre ou du sous-millimètre.

6. Dispositif d'actionnement selon l'une quelconque des revendications précédentes, **caractérisé en ce qu'**un guide (100) est prévu pour la tige de poussée (102) à l'extérieur de la course de déplacement (26) du store de fenêtre (10).

7. Dispositif d'actionnement selon la revendication 6, **caractérisé en ce que** le dispositif de couplage (106) comporte au moins un logement (120) pour le guide (100) dans lequel le guide (100) peut être clipsé.

8. Dispositif d'actionnement selon l'une quelconque des revendications 6 ou 7, **caractérisé en ce que** le guide (100) et/ou la tige de poussée (102) sont guidés à travers un passage de fenêtre (120) d'une porte de véhicule automobile, au moins un élément d'étanchéité (118) étant prévu dans la zone de transition avec le passage de fenêtre (124).

9. Dispositif d'actionnement selon l'une quelconque des revendications 2 à 8, **caractérisé en ce qu'**un adaptateur (122) est prévu dans la zone de jonction du dispositif de couplage (106), ledit adaptateur comportant côté actionnement des moyens de complémentarité de formes adaptés à la géométrie de l'arbre et côté sortie des moyens de complémentarité de formes adaptés à la géométrie du dispositif de couplage (106), notamment de sa roue dentée (110).

10. Dispositif d'actionnement selon l'une quelconque des revendications précédentes, **caractérisé en ce qu'**une comparaison de tolérance est prévue au niveau de l'actionnement électrique (108) et/ou du dispositif de couplage (106) pour comparer la longueur axiale ou la tolérance de l'arbre (104).
